# EUROPÄISCHE PATENTANMELDUNG

(11) **EP 3 563 971 A1**
(43) Veröffentlichungstag der Anmeldung: **06.11.2019**
(21) Anmeldenummer: 19167077.7
(22) Anmeldetag: 03.04.2019
(51) Int. Cl.: B23Q 17/09, G05B 19/406

(54) **VERFAHREN ZUR BEARBEITUNG EINES ROHBAUTEILS DURCH EINE BEARBEITUNGSMASCHINE UND BEARBEITUNGSMASCHINE ZUR BEARBEITUNG EINES ROHBAUTEILS**

(30) Priorität: 04.05.2018 DE 102018206865
(71) Anmelder: Audi AG, 85045 Ingolstadt (DE)
(72) Erfinder: Brunner, Markus, 85098 Großmehring (DE); Fürup, Kolja, 10551 Berlin (DE)

(57) **Zusammenfassung**

Die Erfindung betrifft ein Verfahren, bei welchem ein Materialabtragungsprozess durchgeführt wird, mit zumindest den Schritten: Bereitstellen eines Rohbauteils; Durchführen eines Prozessabschnitts des Materialabtragungsprozesses an dem Rohbauteil unter Verwendung eines, den Prozessabschnitt charakterisierenden Soll-Parameterwertes und sensorisches Ermitteln eines Ist-Parameterwertes; Ermitteln einer Abweichung des Ist-Parameterwertes von dem Soll-Parameterwert; Bestimmen eines Grenzwertes in Abhängigkeit von der Abweichung, wenn der Ist-Parameterwert den Soll-Parameterwert unterschreitet, wobei dann der Grenzwert derart bestimmt wird, dass eine Grenzwertabweichung zwischen dem Grenzwert und dem Ist-Parameterwert einen kleineren Abweichungsbetrag als die Abweichung aufweist, oder Ändern des Durchführens des Prozessabschnitts wenn der Ist-Parameterwert den Soll-Parameterwert um den Überschreitungswert überschreitet; Festlegen des Grenzwertes als Soll-Parameterwert eines nachfolgenden Prozessabschnitts des Materialabtragungsprozesses; Durchführen des nachfolgenden Prozessabschnitts unter Verwendung des beim Festlegen des Grenzwertes festgelegten Soll-Parameterwertes des nachfolgenden Prozessabschnitts. Ein weiterer Aspekt der Erfindung betrifft eine Bearbeitungsmaschine zur Bearbeitung eines Rohbauteils.

## Beschreibung

Die Erfindung betrifft ein Verfahren zur Bearbeitung eines Rohbauteils durch eine Bearbeitungsmaschine, bei welchem das Rohbauteil einem Materialabtragungsprozess unterzogen und dadurch ein Bauteil aus dem Rohbauteil hergestellt wird. Ein zweiter Aspekt der Erfindung betrifft eine Bearbeitungsmaschine zur Bearbeitung eines Rohbauteils.

Durch derartige Bearbeitungsmaschinen, welche beispielsweise als Werkzeugmaschinen ausgestaltet sein können, ist es möglich, beispielsweise durch gießtechnische Verfahren (Gussverfahren) hergestellte Werkstücke unter anderem einer spanenden Bearbeitung zu unterziehen. Den gießtechnischen Verfahren ist gemein, dass sie ein aus dem Werkstück herzustellendes Teil konturnah erzeugen. Das bedeutet, dass die erzeugten Teile ein undefiniertes Aufmaß zu einem vorgegebenen Soll-Maß aufweisen. Gerade bei sehr großen und voluminösen Werkstücken bzw. Teilen ist dieses undefinierte Aufmaß sehr ausgeprägt da eine sogenannte Schwindung während eines Abkühlvorgangs nach dem gießtechnischen Verfahren hier sehr stark zum Tragen kommt. Da die Schwindung derzeit nicht exakt vorhergesagt bzw. berechnet werden kann, wird beim Bearbeiten des Werkstücks bewusst ein zusätzliches Aufmaß hinsichtlich einer Werkstück-Kontur des Werkstücks zugegeben. Dieses zusätzliche Aufmaß kann bei sehr großen Werkstücken, die auf als Großmaschinen ausgebildeten Bearbeitungsmaschinen bearbeitet werden, unter Umständen bis zu 20 mm betragen.

NC-Programme (Numerische-Steuerungs-Programme), die zur Bearbeitung dieser Werkstücke in der Regel verwendet werden, werden meist unter einer Zuhilfenahme sogenannter CAM-Systeme (Computer-Aided-Manufacturing-Systeme) auf Basis von CAD-Daten (Computer-Aided-Design-Daten) erstellt. Dabei bilden die CAD-Daten eine Soll-Geometrie (ohne Aufmaß) des aus dem Werkstück durch Bearbeitung mittels der Bearbeitungsmaschine herzustellenden Teils ab.

Da gegossene Werkstücke ein meist undefiniertes Aufmaß aufweisen, wird bei aus dem Stand der Technik bekannten Systemen im Rahmen einer CAM-Programmierung ein sogenanntes Sicherheitsaufmaß festgelegt. Das bedeutet, dass sämtliche Werkzeugwege eines zur Bearbeitung dienenden Werkzeugs der Bearbeitungsmaschine, die in dem CAM-System programmiert und damit hinterlegt werden, gegen das Sicherheitsaufmaß auf etwaige Kollisionen bzw. Materialabtrag geprüft werden. Das CAM-System berechnet dieses Sicherheitsaufmaß konstant über sämtliche Werkzeugwege. Somit liegt theoretisch an jeder, einem entsprechenden CAD-Datensatz zugeordneten, bearbeiteten Stelle des Teils theoretisch das definierte Aufmaß vor. Dies ist aber in der Realität aufgrund der nicht berechenbaren Schwindungen, häufig nicht der Fall. Aufgrund dieser verfahrenstechnischen Gegebenheiten kann es beispielsweise bei einer spanenden Bearbeitung des Werkstücks zu Beeinträchtigungen kommen. Zu diesen Beeinträchtigungen zählen eine unerwünschte Kollision zwischen Maschinenkomponenten, wie beispielsweise einem Maschinenkopf der Bearbeitungsmaschine und dem Werkstück während der Bearbeitung, eine Kollision zwischen Werkzeugkomponenten wie beispielsweise einem Fräswerkzeughalter und dem Werkstück und nicht zuletzt eine Überlastung eines Maschinenantriebs, welche durch unzulässig hohen Materialabtrag hervorgerufen werden kann.

Aus der DE 10 2007 005 222 A1 ist eine Werkzeugmaschine mit einem spanabhebenden Schneidwerkzeug bekannt. An dem Schneidwerkzeug sind piezokeramische Wandler an solchen Stellen angeordnet, an welchen Kraftkomponenten einer Zerspankraft auf die Wandler einwirken. Jeweilige, durch die Krafteinwirkung auf die Wandler erzeugte Signale werden zu einer Regeleinrichtung der Werkzeugmaschine geleitet. Unter Berücksichtigung dieser Signale wird eine Bearbeitung von Werkstücken geregelt. Dadurch können Schäden infolge eines Überschreitens von vorgegebenen Grenzwerten während der Bearbeitung verhindert werden.

Aufgabe der vorliegenden Erfindung ist es, ein Verfahren sowie eine Bearbeitungsmaschine der eingangs genannten Art zu schaffen, durch welche Beschädigungen wirksam vermieden werden können und eine zeitsparende Bearbeitung ermöglicht ist.

Diese Aufgabe wird erfindungsgemäß durch ein Verfahren mit den Merkmalen des Patentanspruchs 1 sowie durch eine Bearbeitungsmaschine mit den Merkmalen des Patentanspruchs 9 gelöst. Vorteilhafte Weiterbildungen der vorliegenden Erfindung sind Gegenstand der abhängigen Ansprüche.

Ein erster Aspekt der Erfindung betrifft ein Verfahren zur Bearbeitung eines Rohbauteils durch eine Bearbeitungsmaschine, bei welchem das Rohbauteil einem Materialabtragungsprozess unterzogen und dadurch ein Bauteil aus dem Rohbauteil hergestellt wird, umfassend zumindest die folgenden Schritte:
a) Bereitstellen des Rohbauteils;
b) Durchführen eines Prozessabschnitts des Materialabtragungsprozesses unter Verwendung zumindest eines, den Prozessabschnitt charakterisierenden Soll-Parameterwertes und Ermitteln zumindest eines Ist-Parameterwertes mittels zumindest eines Sensors;
c) Ermitteln zumindest einer Abweichung des zumindest einen Ist-Parameterwertes von dem zumindest einen Soll-Parameterwert;
d) Bestimmen zumindest eines Grenzwertes in Abhängigkeit von der Abweichung, wenn der zumindest eine Ist-Parameterwert den zumindest einen Soll-Parameterwert unterschreitet, wobei dann der zumindest eine Grenzwert derart bestimmt wird, dass eine Grenzwertabweichung zwischen dem zumindest einen Grenzwert und dem zumindest einen Ist-Parameterwert einen kleineren Abweichungsbetrag als die Abweichung aufweist, oder Ändern des Durchführens des Prozessabschnitts in Abhängigkeit von zumindest einem Überschreitungswert, wenn der zumindest eine Ist-Parameterwert den zumindest einen Soll-Parameterwert um den zumindest einen Überschreitungswert überschreitet, wobei dann der zumindest eine Soll-Parameterwert des Prozessabschnitts als der zumindest eine Grenzwert festgelegt wird;
e) Festlegen des zumindest einen Grenzwertes als wenigstens einen Soll-Parameterwert eines nachfolgenden Prozessabschnitts des Materialabtragungsprozesses;
f) Durchführen des nachfolgenden Prozessabschnitts unter Verwendung des in Schritt e) festgelegten wenigstens einen Soll-Parameterwertes.

Dies ist von Vorteil, da das Bestimmen des zumindest einen Grenzwertes in Schritt d) somit in Abhängigkeit von der Abweichung zwischen dem Ist-Parameterwert und dem Soll-Parameterwert erfolgt. Der hierdurch bestimmte Grenzwert wird dann für den dem Prozessabschnitt nachfolgenden Prozessabschnitt als Soll-Parameterwert festgelegt, sodass der nachfolgende Prozessabschnitt unter Verwendung des ermittelten, dynamisch angepassten Grenzwertes durchgeführt werden kann.

Im Gegensatz zu aus dem Stand der Technik bekannten Systemen, bei welchen Grenzwerte vor einer Bearbeitung festgelegt und entsprechende Sensorsignale, beispielsweise von Kraftsensoren mit den Grenzwerten verglichen werden, um eine Überlastung zu vermeiden, erfolgt bei dem vorliegenden Verfahren eine Anpassung des Grenzwerts während des Materialabtragungsprozesses. Dadurch können Beschädigungen besonders wirksam vermieden werden, zumal durch das Anpassen der Grenzwerte während der Bearbeitung (während des Materialabtragungsprozesses) auch besonders dynamisch auf unerwartete Ereignisse reagiert werden kann. So kann beispielsweise auf Schwindungen mit unbekanntem Schwindungsmaß reagiert und dadurch beispielsweise eine Überlastung der Bearbeitungsmaschine vermieden werden. Darüber hinaus können auch Kollisionen wirksam vermieden werden.

Die Bearbeitungsmaschine kann beispielsweise als Fräsmaschine ausgebildet sein, welche eine Werkzeugaufnahme mit einem daran aufgenommenen Fräswerkzeug umfassen kann. Das Fräswerkzeug kann beispielsweise als Schaftfräser ausgebildet sein.

Das Rohbauteil kann beispielsweise ein Gussteil sein. Das Rohbauteil kann also durch ein Gussverfahren hergestellt sein. Das Rohbauteil kann beispielsweise als Presswerkzeug-Gussrohling ausgebildet sein, aus welchem durch den Materialabtragungsprozess als das Bauteil ein Presswerkzeug hergestellt werden kann. Ein derartiges Presswerkzeug wird meist im Rahmen einer Einzelteilfertigung hergestellt und stellt dementsprechend meist kein Serien-Fertigungsteil dar.

Der Soll-Parameterwert kann beispielsweise eine Soll-Leistung oder eine Soll-Kraft sein, welche bei dem Materialabtragungsprozess, beispielsweise gemäß eines CAM-Modells (Computer-Aided-Manufacturing-Modells) voraussichtlich aufzuwenden ist. Der Ist-Parameterwert kann dementsprechend beispielsweise eine Ist-Leistung oder eine Ist-Kraft sein, welche bei dem Materialabtragungsprozess tatsächlich aufzuwenden ist und mittels des Sensors erfasst werden kann.

Unter dem "Bestimmen des Grenzwertes in Abhängigkeit von der Abweichung" in Schritt d) ist zu verstehen, dass der Grenzwert entsprechend der Größe des Abweichungsbetrags bestimmt werden kann.

Das Ändern des Durchführens des Prozessabschnitts in Schritt d) kann erfolgen, sobald der Überschreitungswert ermittelt ist. Beispielsweise kann ein erster Prozessabschnittsteil des Prozessabschnitts unter Verwendung des ursprünglichen Soll-Parameterwertes durchgeführt werden und bei einem an den ersten Prozessabschnittsteil anschließenden zweiten Prozessabschnittsteil des Prozessabschnitts das Ändern des Durchführens des Prozessabschnitts erfolgen. Bei dem Ändern des Durchführens des Prozessabschnitts kann beispielsweise ein Verlangsamen einer Vorschubgeschwindigkeit eines für den Materialabtragungsprozess verwendeten Werkzeugs oder ein Verringern einer Eindringtiefe des Werkzeugs in ein Rohbauteil-Material des Rohbauteils erfolgen, um nur einige Beispiele zu nennen.

Ein Beispiel für den Prozessabschnitt stellt ein Materialabtrag von dem Rohbauteil in einer ersten Vorschubrichtung (erste Richtung eines Vorschubs) anhand des Werkzeugs der Bearbeitungsmaschine dar. Der Prozessabschnitt kann aus den jeweiligen (ersten und zweiten) Prozessabschnittsteilen zusammengesetzt sein.

Der nachfolgende Prozessabschnitt kann beispielsweise ein Materialabtrag von dem Rohbauteil in einer zweiten Vorschubrichtung (zweite Richtung des Vorschubs) sein, bei welchem der Materialabtrag anhand des Werkzeugs der Bearbeitungsmaschine erfolgt.

Unter dem in Schritt d) genannten Ausdruck, dass "der Soll-Parameterwert des Prozessabschnitts als der zumindest eine Grenzwert festgelegt wird" ist zu verstehen, dass der Grenzwert dem Soll-Parameterwert des Prozessabschnitts entspricht. In diesem Falle wird dann dementsprechend in Schritt e) der Soll-Parameterwert des Prozessabschnitts dem Soll-Parameterwert des nachfolgenden Prozessabschnitts zugeordnet.

In einer vorteilhaften Weiterbildung der Erfindung erfolgt in einem Schritt g) ein Wiederholen der Schritte b) bis f) bis zum Erreichen eines Endes des Materialabtragungsprozesses. Dies ist von Vorteil, da hierdurch über den gesamten Materialabtragungsprozess eine zeitsparende Bearbeitung ermöglicht ist und Beschädigungen vermieden werden können.

In einer weiteren vorteilhaften Weiterbildung der Erfindung wird der Materialabtragungsprozess unterbrochen, wenn der Überschreitungswert in Schritt d) eine vorgegebene Überschreitungswertgrenze erreicht. Durch die vorgegebene Überschreitungswertgrenze können Beschädigungen beispielsweise des Rohbauteils oder der Bearbeitungsmaschine besonders wirksam vermieden werden. Durch die vorgegebene Überschreitungswertgrenze kann beispielsweise auf unerwartete Kollisionen wirksam reagiert werden. Ein Beispiel für eine unerwartete Kollision stellt ein Zusammenstoß einer Werkzeugaufnahme der Bearbeitungsmaschine mit einer Klemmvorrichtung dar, mittels welcher das Rohbauteil zu dessen Lagesicherung während des Materialabtragungsprozesses ortsfest fixiert sein kann. So können auch Abweichungen beispielsweise zwischen einem den Materialabtragungsprozess simulierenden Modell und dem realen Materialabtragungsprozess zuverlässig erkannt und damit einhergehende Probleme vermieden werden. Die besagte Klemmvorrichtung kann beispielsweise eine Schraube zum Fixieren des Rohbauteils umfassen, welche zwar in dem Modell vollständig versenkt sein kann, jedoch beim realen Materialabtragungsprozess (unbeabsichtigt) unvollständig versenkt sein kann und dementsprechend hervorstehen kann, sodass die Schraube die Bewegung der Werkzeugaufnahme behindert und die Gefahr einer Kollision zwischen der Schraube und der Werkzeugaufnahme besteht. Die Überschreitungswertgrenze kann einem Grenzwert entsprechen, welcher bei dem Materialabtragungsprozess nur dann erreicht wird, wenn es zu einem unerwarteten Ereignis, beispielsweise zu Kollisionen kommt.

Bevorzugt kann der Materialabtragungsprozess unterbrochen und/oder ein Warnhinweis ausgegeben werden, wenn der Überschreitungswert in Schritt d) einen vorgegebenen Verschleißgrenzwert erreicht. Der Verschleißgrenzwert kann einen geringeren Werte-Betrag aufweisen, als die Überschreitungswertgrenze. Mit anderen Worten kann der Verschleißgrenzwert betragsmäßig kleiner sein, als die Überschreitungswertgrenze. Dabei kann der Verschleißgrenzwert mit einem betragsmäßigen Abstand (Offset) von der Überschreitungswertgrenze vorgegeben werden. Zur Veranschaulichung soll folgendes Beispiels dienen: Liegt die Überschreitungswertgrenze bei einem Werte-Betrag von 500 (beispielsweise bei Vorgabe der Überschreitungswertgrenze als Grenzdrehmoment von 500 Nm oder als Grenzkraft von 500 N), so kann der Verschleißgrenzwert einen Werte-Betrag von 400 (Offset: "-100") betragen. Es kann dann während der Bearbeitung (Materialabtragungsprozess) vorkommen, dass zwar der Verschleißgrenzwert jedoch nicht die Überschreitungswertgrenze überschritten wird. Auf diesen Fall kann durch die Vorgabe des Verschleißgrenzwertes besonders flexibel und frei definierbar reagiert werden. Bei Überschreiten des Verschleißgrenzwertes (jedoch nicht der Überschreitungswertgrenze) kann die Bearbeitung, also der Materialabtragungsprozess, zwar unterbrochen werden, jedoch auf einen Abbruch verzichtet werden (nicht abgebrochen). Im Rahmen der Unterbrechung kann das Fräswerkzeug zu einem optischen Messsystem geführt werden, welches den Zustand des Fräswerkzeuges, insbesondere hinsichtlich dessen Verschleißzustandes, überprüfen kann. Die Bearbeitungsmaschine kann das optische Messsystem umfassen, sodass nicht nur die Bearbeitung des Rohteils, sondern auch eine besonders umfassende Werkzeugüberprüfung anhand der Bearbeitungsmaschine erfolgen kann. Wird durch das Messsystem festgestellt, dass die Werkzeugaufnahme oder das Werkzeug der Bearbeitungsmaschine in einem guten Zustand ist (also nicht verschlissen oder gebrochen ist), wird die Bearbeitung an einer Stelle des Rohbauteils fortgesetzt, an welcher zuvor die Unterbrechung erfolgt ist und der betragsmäßige Abstand (Offset) zwischen Verschleißgrenzwert und Überschreitungswertgrenze zumindest für den nachfolgenden Prozessabschnitt reduziert, da es sich beim vorangehenden Überschreiten des Verschleißgrenzwertes vermutlich um einen Fehlalarm handelte.

Stellt das Messsystem einen Verschleiß am Werkzeug (beispielsweise Fräswerkzeug) fest, erfolgt ein Werkzeugtausch (Austausch des verschlissenen Werkzeugs durch ein neues, gleichwertiges Werkzeug) und die Bearbeitung kann ebenfalls an der Stelle fortgesetzt werden, an welcher zuvor unterbrochen wurde. In diesem Falle wird jedoch wird der betragsmäßige Abstand (Offset) zwischen Verschleißgrenzwert und Überschreitungswertgrenze beibehalten, also nicht verändert, da das Erreichen des Verschleißgrenzwertes auf das verschlissene Werkzeug zurückzuführen ist.

Gemäß einer weiteren vorteilhaften Weiterbildung der Erfindung erfolgen die Schritte c) bis e) während des Prozessabschnitts des Materialabtragungsprozesses. Dies ist von Vorteil, da hierdurch eine parallele Durchführung der Schritte c) bis e) sowie des Prozessabschnitts erfolgen kann. Dadurch ist eine besonders zeitsparende und unterbrechungsfreie Bearbeitung des Rohbauteils ermöglicht. Mit anderen Worten können also die Schritte c) bis e) während (und damit zeitlich parallel zu) der Bearbeitung des Rohbauteils im Rahmen des Prozessabschnitts erfolgen.

In einer weiteren vorteilhaften Weiterbildung der Erfindung wird als der wenigstens eine Sensor ein Stromsensor verwendet, und als der zumindest eine Soll-Parameterwert wird ein Soll-Strombedarf der Bearbeitungsmaschine verwendet. Durch den Stromsensor kann eine besonders robuste Messung erfolgen, da der Stromsensor - anders als beispielsweise Kraftsensoren - keiner mechanischen Belastung oder der Gefahr von bei Kollisionen auftretenden, unzulässig großen Kräften ausgesetzt sind. Der Soll-Strombedarf kann ein während des Materialabtragungsprozesses zu erwartender Soll-Strombedarf sein. Als Ist-Parameterwert kann anhand des Stromsensors dementsprechend ein Ist-Strombedarf ermittelt werden.

In einer weiteren vorteilhaften Weiterbildung der Erfindung wird der zumindest eine Soll-Parameterwert basierend auf einem Materialabtragungsprozess-Modell vorgegeben. Das Materialabtragungsprozess-Modell ermöglicht eine zumindest realitätsnahe Durchführung des (realen) Materialabtragungsprozesses. Bei dem Materialabtragungsprozess-Modell kann es sich um ein CAM-Modell handeln. Dieses CAM-Modell kann auf einem Rohteil-Modell des Rohbauteils basieren. Das Rohbauteil-Modell des Rohbauteils kann ein CAD-Modell sein.

In einer weiteren vorteilhaften Weiterbildung der Erfindung wird der Grenzwert in Schritt d) basierend auf einer zeitlichen Änderung der Abweichung während des Prozessabschnitts bestimmt. Hierzu können beispielsweise jeweils zwei zeitlich aufeinanderfolgende Ist-Parameterwerte mit diesen jeweils zugeordneten Soll-Parameterwerten verglichen werden und dementsprechend ein zeitbasierter Gradient gebildet werden. Dadurch lassen sich unerwartete Ereignisse, wie beispielsweise Kollisionen, besonders schnell erkennen.

In einer weiteren vorteilhaften Weiterbildung der Erfindung wird der Grenzwert in Schritt d) basierend auf einer örtlichen Änderung der Abweichung während des Prozessabschnitts bestimmt. Hierzu können beispielsweise jeweils zwei örtlich aufeinanderfolgende Ist-Parameterwerte mit diesen jeweils zugeordneten Soll-Parameterwerten verglichen werden und dementsprechend ein ortsbasierter Gradient gebildet werden. Dadurch kann eine besonders genaue Beurteilung erfolgen, ob die Abweichung beispielsweise rohbauteilbedingt (beispielsweise bedingt durch eine Bauteilgeometrie des Rohbauteils) oder kollisionsbedingt ist. Die rohbauteilbedingte Abweichung kann sich beispielsweise infolge einer an einem bestimmten Ort des Rohbauteils vorliegenden Materialansammlung des Rohbauteils bei dessen Fertigung ergeben.

Ein zweiter Aspekt der Erfindung betrifft eine Bearbeitungsmaschine zur Bearbeitung eines Rohbauteils, mittels welcher das Rohbauteil einem Materialabtragungsprozess unterziehbar und dadurch ein Bauteil aus dem Rohbauteil herstellbar ist und welche dazu eingerichtet ist,
- einen Prozessabschnitt des Materialabtragungsprozesses unter Verwendung zumindest eines, den Prozessabschnitt charakterisierenden Soll-Parameterwertes durchzuführen und zumindest einen Ist-Parameterwert mittels zumindest eines Sensors der Bearbeitungsmaschine zu ermitteln;
- zumindest eine Abweichung des zumindest einen Ist-Parameterwertes von dem zumindest einen Soll-Parameterwert zu ermitteln;
- einen Grenzwertes in Abhängigkeit von der zumindest einen Abweichung zu bestimmen, wenn der zumindest eine Ist-Parameterwert den zumindest einen Soll-Parameterwert unterschreitet,
- den zumindest einen Grenzwert derart zu bestimmen, dass zumindest eine Grenzwertabweichung zwischen dem zumindest einen Grenzwert und dem zumindest einen Ist-Parameterwert einen kleineren Abweichungsbetrag als die zumindest eine Abweichung aufweist,
- das Durchführen des Prozessabschnitts in Abhängigkeit von zumindest einem Überschreitungswert zu ändern, wenn der zumindest eine Ist-Parameterwert den zumindest einen Soll-Parameterwert um den zumindest einen Überschreitungswert überschreitet,
- den Soll-Parameterwert des Prozessabschnitts als den Grenzwert festzulegen;
- den Grenzwert als Soll-Parameterwert eines nachfolgenden Prozessabschnitts des Materialabtragungsprozesses festzulegen;
- den nachfolgenden Prozessabschnitt unter Verwendung des als Soll-Parameterwert des nachfolgenden Prozessabschnitts festgelegten Grenzwertes durchzuführen.

Mit anderen Worten kann die Bearbeitungsmaschine dazu eingerichtet sein, zumindest die Verfahrensschritte b) bis f) des Verfahrens gemäß dem ersten Aspekt der Erfindung durchzuführen. Die im Zusammenhang mit dem erfindungsgemäßen Verfahren gemäß dem ersten Aspekt der Erfindung vorgestellten Merkmale sowie deren Vorteile gelten entsprechend für die erfindungsgemäße Bearbeitungsmaschine gemäß dem zweiten Aspekt der Erfindung und umgekehrt.

Denkbar ist allgemein auch, dass die Bearbeitungsmaschine dazu eingerichtet ist, das Rohbauteil bereitzustellen, also den Schritt a) des Verfahrens gemäß dem ersten Aspekt der Erfindung durchzuführen. Hierzu kann die Bearbeitungsmaschine beispielsweise eine Gießvorrichtung umfassen, mittels welcher das Rohbauteil herstellbar und dadurch bereitstellbar ist.

In einer vorteilhaften Weiterbildung der Erfindung ist die Bearbeitungsmaschine eine Fräsmaschine, eine Drehmaschine, eine Schleifmaschinen oder eine Erodiermaschine. Dies ist von Vorteil, da durch derartige Maschinen, wie beispielsweise die Fräsmaschine, eine besonders gezielte und bedarfsgerechte Materialabtragung erfolgen kann.

Zu der Erfindung gehören auch Weiterbildungen der erfindungsgemäßen Bearbeitungsmaschine, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Bearbeitungsmaschine hier nicht noch einmal beschrieben.

Im Folgenden sind Ausführungsbeispiele der Erfindung beschrieben. Hierzu zeigt:
- Fig. 1: ein Ablaufdiagramm, welches qualitativ einzelne Verfahrensschritte eines Verfahrens zur Bearbeitung eines Rohbauteils durch eine Bearbeitungsmaschine zeigt, bei welchem das Rohbauteil einem Materialabtragungsprozess unterzogen und dadurch ein Bauteil aus dem Rohbauteil hergestellt wird;
- Fig. 2: ein Diagramm, welches qualitativ einen Signalverlauf eines Sensors der Bearbeitungsmaschine während des Materialabtragungsprozess zur Bearbeitung des Rohbauteils mittels der Bearbeitungsmaschine zeigt;
- Fig. 3: eine schematische Darstellung eines Aufbaus der Bearbeitungsmaschine;
- Fig. 4: eine schematische Darstellung von Soll-ParameterwertVerläufen und Ist-Parameterwert-Verläufen von verschiedenen, aufeinanderfolgenden Prozessabschnitten des Materialabtragungsprozesses; und
- Fig. 5: eine Perspektivansicht eines Teilbereichs des Rohbauteils, welches dem Materialabtragungsprozess unterzogen wird, wodurch sich die in Fig. 4 gezeigten Soll-ParameterwertVerläufe und Ist-Parameterwert-Verläufe ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

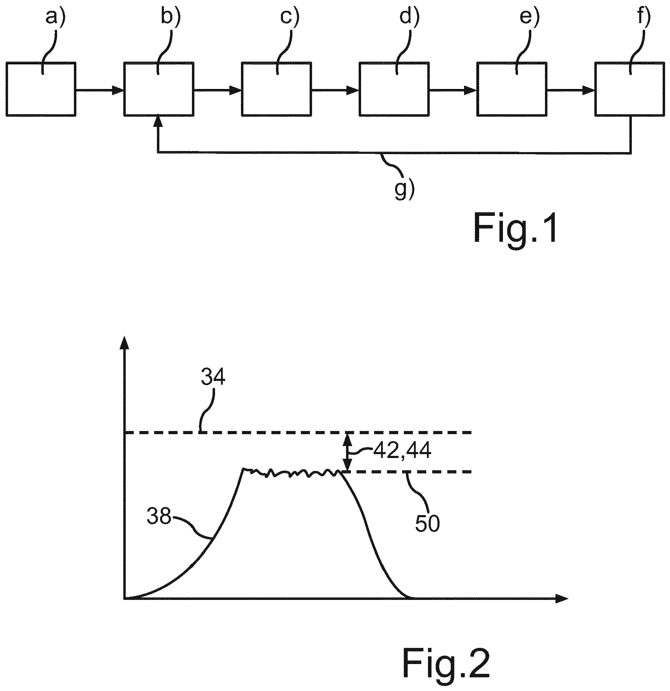

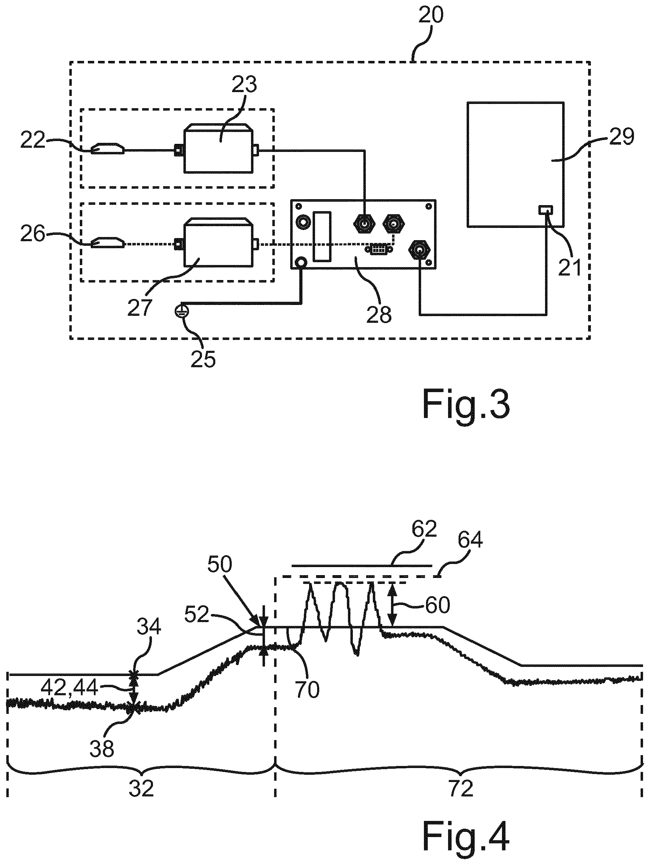

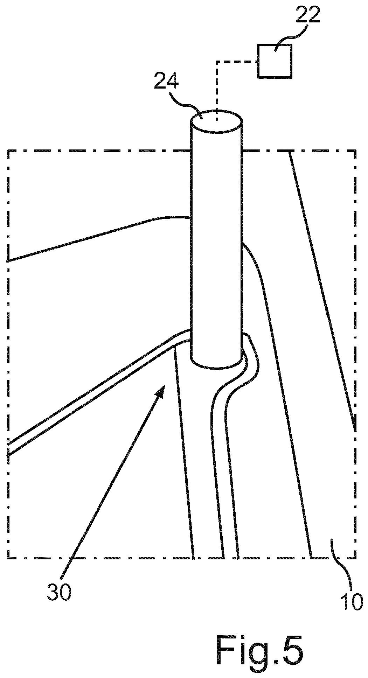

Fig. 1 zeigt ein Flussdiagramm, welches einzelne Schritte a) - g) eines Verfahrens zur Bearbeitung eines, vorliegend als Gussteil ausgebildeten Rohbauteils 10 durch eine in Fig. 3 schematisch gezeigte Bearbeitungsmaschine 20 verdeutlicht. Bei diesem Verfahren wird das Rohbauteil 10 einem, in Fig. 5 teilweise gezeigten Materialabtragungsprozess 30 unterzogen und dadurch ein Bauteil aus dem Rohbauteil 10 hergestellt. Um bei dem Materialabtragungsprozess 30 Material von dem Rohbauteil 10 abzutragen, umfasst die Bearbeitungsmaschine 20 ein Werkzeug 24, welches vorliegend lediglich in Fig. 5 schematisch angedeutet ist.

In Schritt a) wird das Rohbauteil 10, welches ausschnittsweise in Fig. 5 gezeigt ist, bereitgestellt. In dem anschließenden Schritt b) erfolgt ein Durchführen eines, in Fig. 4 beispielhaft gezeigten Prozessabschnitts 32 des Materialabtragungsprozesses 30 unter Verwendung eines, den Prozessabschnitt 32 charakterisierenden Soll-Parameterwertes 34 und ein Ermitteln eines Ist-Parameterwertes 38 mittels eines Sensors 22 der Bearbeitungsmaschine 20. In Schritt c) erfolgt ein Ermitteln einer, ebenfalls in Fig. 4 gezeigten Abweichung 42 des Ist-Parameterwertes 38 von dem Soll-Parameterwert 34.

In Schritt d) erfolgt ein Bestimmen eines Grenzwertes 50 in Abhängigkeit von der Abweichung, wenn der Ist-Parameterwert 38 den Soll-Parameterwert 34 unterschreitet, wobei dann der Grenzwert 50 derart bestimmt wird, dass eine Grenzwertabweichung 52 zwischen dem Grenzwert 50 und dem Ist-Parameterwert 38 einen kleineren Abweichungsbetrag als die Abweichung 42 aufweist. Die Abweichung 42 und die Grenzwertabweichung 52 sind exemplarisch in Fig. 4 angedeutet, wobei erkennbar ist, dass die Grenzwertabweichung 52 hinsichtlich des Abweichungsbetrags kleiner ist als die Abweichung 42. Mit anderen Worten liegt der Grenzwert 50 näher an dem Ist-Parameterwert 38. Dementsprechend ist eine dynamische Ermittlung des Grenzwerts 50 erfolgt. Fig. 2 zeigt ebenfalls schematisch und exemplarisch die Abweichung 42 des Ist-Parameterwertes 38 von dem Soll-Parameterwert 34, wobei in dem in Fig. 2 gezeigten Beispiel der Grenzwert besonders nahe an den Ist-Parameterwert 38 angepasst wird.

Alternativ dazu erfolgt in Schritt d) ein Ändern des Durchführens des Prozessabschnitts 32 in Abhängigkeit von einem Überschreitungswert 60, wenn der Ist-Parameterwert 38 den Soll-Parameterwert 34 um den Überschreitungswert 60 überschreitet, wobei dann der Soll-Parameterwert 34 des Prozessabschnitts 30 als der Grenzwert 50 festgelegt wird. Der Ist-Parameterwert 38 kann den Soll-Parameterwert 34 überschreiten, wenn das Werkzeug 24 während des Materialabtragungsprozesses 30 beispielsweise in einen, in Fig. 5 gezeigten, Eckbereich des Rohbauteils 10 gelangt. In dem Eckbereich kann eine Materialansammlung vorliegen, wodurch das Werkzeug 24 beim Abtragen von Material in diesem Eckbereich stärker belastet wird und dadurch der Ist-Parameterwert 38 den Soll-Parameterwert 34 um den Überschreitungswert 60 überschreitet.

Der Materialabtragungsprozess 30 wird unterbrochen, wenn der Überschreitungswert 60 in Schritt d) eine, in Fig. 4 gezeigte, vorgegebene Überschreitungswertgrenze 62 erreicht, um Beschädigungen zu vermeiden. Die Überschreitungswertgrenze 62 kann beispielsweise einer Belastungsgrenze des Werkzeugs 24 entsprechen. Bei einer Überschreitung der Überschreitungswertgrenze 62 kann es beispielsweise zu einem Werkzeugbruch des Werkzeugs 24 und damit zu einer Beschädigung kommen.

Eine Unterbrechung des Materialabtragungsprozess 30 erfolgt auch, wenn der Überschreitungswert 60 in Schritt d) einen, in Fig. 4 anhand einer gestrichelten Linie ebenfalls gezeigten, vorgegebenen Verschleißgrenzwert 64 erreicht. Der Verschleißgrenzwert 64 weist einen geringeren Werte-Betrag auf, als die Überschreitungswertgrenze 62, weshalb der Verschleißgrenzwert 64 in Fig. 4 unterhalb der Überschreitungswertgrenze 62 liegt.

In Schritt e) erfolgt ein Festlegen des Grenzwertes 50 als Soll-Parameterwert 70 eines nachfolgenden Prozessabschnitts 72 des Materialabtragungsprozesses 30. Somit erfolgt also eine dynamische Anpassung des Soll-Parameterwertes 70 an den Grenzwert 50.

Die Schritte c) bis e) erfolgen vorliegend während des Prozessabschnitts 32 des Materialabtragungsprozesses 30, sodass der Soll-Parameterwert 70 bereits zu Beginn des Prozessabschnitts 72 vorliegt und es dementsprechend zu keinen Verzögerungen beim Durchführen des Materialabtragungsprozesses 30 kommt.

In Schritt f) erfolgt ein Durchführen des nachfolgenden Prozessabschnitts 72 unter Verwendung des in Schritt e) festgelegten Soll-Parameterwertes 70.

In dem weiteren Schritt g) erfolgt ein Wiederholen der Schritte b) bis f) bis zum Erreichen eines Endes des Materialabtragungsprozesses 30. Am Ende des Materialabtragungsprozesses 30 ist das Bauteil vollständig aus dem Rohbauteil 10 hergestellt.

Die Bearbeitungsmaschine 20 kann optional auch noch einen weiteren, in Fig. 3 angedeuteten Sensor 26 umfassen, welcher als Stromsensor ausgebildet sein und verwendet werden kann. Sofern Messungen mittels des weiteren Sensors 26 erfolgen, wird als der Soll-Parameterwert 34 ein Soll-Strombedarf der Bearbeitungsmaschine 20 verwendet, worauf nachfolgend jedoch nicht näher eingegangen wird.

Der Soll-Parameterwert 34 ist basierend auf einem Materialabtragungsprozess-Modell vorgegeben.

Der Grenzwert 50 kann in Schritt d) basierend auf einer zeitlichen Änderung der Abweichung 42 während des Prozessabschnitts 32 bestimmt werden. Zusätzlich oder alternativ kann der Grenzwert 50 in Schritt d) auch basierend auf einer örtlichen Änderung der Abweichung 42 während des Prozessabschnitts 32 bestimmt werden.

Fig. 3 zeigt schematisch einen Aufbau eines Teils der, eine Fräsmaschine umfassenden oder alternativ als Fräsmaschine ausgebildeten Bearbeitungsmaschine 20 zur Bearbeitung des Rohbauteils 10, mittels welcher das Rohbauteil 10 dem Materialabtragungsprozess 30 unterziehbar und dadurch das Bauteil aus dem Rohbauteil 10 herstellbar ist. Das vorliegend als Schaftfräser ausgebildete Werkzeug 24 ist in Fig. 3 nicht weiter dargestellt, sondern lediglich in Fig. 5 schematisch verdeutlicht.

Die Bearbeitungsmaschine 20 umfasst neben den Sensoren 22, 26 auch jeweilige Verstärker 23, 27, über welche die Sensoren 22, 26 mit einer Überwachungsvorrichtung 28 der Bearbeitungsmaschine 20 gekoppelt sind. Die Überwachungsvorrichtung 28, welche eine Mehrzahl an Messkanälen zur Koppelung der Verstärker 23, 27 aufweist, ist über einen Masseanschluss 25 geerdet. Darüber hinaus umfasst die Bearbeitungsmaschine 20 einen signalübertragend mit der Überwachungsvorrichtung 28 gekoppelten Postprozessor 21, welcher zumindest zum Durchführen der Schritte c) bis e) ausgebildet, also mit anderen Worten zum Verarbeiten des Ist-Parameterwerts 38, des Soll-Parameterwerts 34 sowie zur Ermittlung des Grenzwerts 50 ausgestaltet ist. Über den Postprozessor 21 kann der Grenzwert 50 generiert und an ein zum Betreiben der Bearbeitungsmaschine 20 sowie zum Steuern und/oder Regeln des Materialabtragungsprozesses 30 verwendetes NC-Programm übergeben werden. Das NC Programm kann beispielsweise auf einem Speicher der Bearbeitungsmaschine 20 in der Schalteinrichtung 29 (Schaltschrank) hinterlegt sein.

Die Bearbeitungsmaschine 20 ist dazu eingerichtet den Prozessabschnitt 32 des Materialabtragungsprozesses 30 unter Verwendung des, den Prozessabschnitt 32 charakterisierenden Soll-Parameterwertes 34 durchzuführen und den Ist-Parameterwert 38 - je nach Art des Ist-Parameterwertes 38 (Kraft, Strom) mittels des Sensors 22 bzw. mittels des Sensors 26 der Bearbeitungsmaschine 20 zu ermitteln. Darüber hinaus ist die Bearbeitungsmaschine 20 dazu eingerichtet die Abweichung 42 des Ist-Parameterwertes 38 von dem Soll-Parameterwert 34 zu ermitteln. Zudem ist die Bearbeitungsmaschine 20 dazu eingerichtet den Grenzwert 50 in Abhängigkeit von der der Abweichung 42 zu bestimmen, wenn der Ist-Parameterwert 38 den Soll-Parameterwert 34 unterschreitet. Außerdem ist die Bearbeitungsmaschine 20 dazu eingerichtet den Grenzwert 50 derart zu bestimmen, dass die Grenzwertabweichung 52 zwischen dem Grenzwert 50 und dem Ist-Parameterwert 38 den kleineren Abweichungsbetrag als die Abweichung 42 aufweist. Die Bearbeitungsmaschine 20 ist auch dazu eingerichtet das Durchführen des Prozessabschnitts 32 in Abhängigkeit von dem Überschreitungswert 60 zu ändern, wenn der Ist-Parameterwert 38 den Soll-Parameterwert 34 um den Überschreitungswert 60 überschreitet. Mittels der Bearbeitungsmaschine 20 kann auch der Soll-Parameterwert 34 des Prozessabschnitts 32 als der Grenzwert 50 festgelegt werden. Die Bearbeitungsmaschine 20 ist zudem dazu eingerichtet den Grenzwert 50 als den Soll-Parameterwert 70 des nachfolgenden Prozessabschnitts 72 des Materialabtragungsprozesses 30 festzulegen. Des Weiteren ist die Bearbeitungsmaschine 20 dazu eingerichtet den nachfolgenden Prozessabschnitt 72 unter Verwendung des als Soll-Parameterwert 70 des nachfolgenden Prozessabschnitts festgelegten Grenzwertes 50 durchzuführen.

Das vorliegende Verfahren ist insbesondere zur Fertigung des Bauteils als Einzelteil, also als Nicht-Serienteil geeignet. Anhand des während des Materialabtragungsprozesses 30 ermittelten Grenzwerts 50 kann eine dynamische Anpassung des Soll-Parameterwerts 70 des nachfolgenden Prozessabschnitts 72 erfolgen, sodass ein bei der Serien-Herstellung (Serienfertigung) häufig eingesetztes "Einlernen" einer Werkzeugführung des Werkzeugs 24 zur Durchführung des Materialabtragungsprozesses 30 entfallen kann.

Das vorliegende Verfahren sowie die Bearbeitungsmaschine 20 ermöglichen eine effektive Kollision-und Prozessüberwachung in der Einzelteilfertigung. Der Grenzwert 50 kann dynamisch während des Materialabtragungsprozesses 30 ermittelt und zumindest der nachfolgenden Prozessabschnitts 72 in Abhängigkeit von dem Soll-Parameterwert 70 (und damit auch in Abhängigkeit von dem Grenzwert 50) durchgeführt werden. Der Grenzwert 50 wird insgesamt dynamisch in Abhängigkeit von dem Ist-Parameterwert 38 und dem Soll-Parameterwert 34 sowie während des Materialabtragungsprozesses 30 ermittelt und verwendet. Der Soll-Parameterwert 34 wird vor dem Beginn der Bearbeitung basierend auf dem Materialabtragungsprozess-Modell (CAM-Modell) vorgegeben, was anhand des Postprozessors 21 erfolgen kann. Der Postprozessor 21 kann dementsprechend eine Auswertungslogik bilden, die auf Basis des theoretischen Rohteilmodells (Materialabtragungsprozess-Modell) den Grenzwert 50 generiert. Der Postprozessor 21 kann beispielsweise als PLC-Baustein (Programmable-Logic-Control-Baustein) ausgebildet sein, der den Grenzwert 50 verarbeitet, wodurch die Kollisions- und Prozessüberwachung während des Materialabtragungsprozesses 30 ermöglicht ist. Durch das Festlegen des Grenzwertes 50 als Soll-Parameterwert 70 des nachfolgenden Prozessabschnitts gemäß Schritt e) kann eine Parametrierung des nachfolgenden Prozessabschnitts 72 im Hinblick auf den zuvor (beim Prozessabschnitt 32) erreichten Grenzwert 50 erfolgen.

Der Soll-Parameterwert 24 wird dabei als zu erwartender Grenzwert auf Basis des Materialabtragungsprozess-Modells vorgegeben und bildet die Basis für den Vergleich mit dem Ist-Parameterwert 38 und damit für die Ermittlung des Grenzwertes 50. Es ist klar, dass jeweils eine Mehrzahl an Parameterwerten (Soll-Parameterwerte, Ist-Parameterwerte) sowie Grenzwerten im Rahmen des Verfahrens verarbeitet bzw. ermittelt werden können, wenngleich in den vorstehenden Ausführungen lediglich auf die Soll-Parameterwert 34, 70, den Ist-Parameterwert 38 sowie den Grenzwert 50 Bezug genommen wird.

## Patentansprüche

1. Verfahren zur Bearbeitung eines Rohbauteils (10) durch eine Bearbeitungsmaschine (20), bei welchem das Rohbauteil (10) einem Materialabtragungsprozess (30) unterzogen und dadurch ein Bauteil aus dem Rohbauteil hergestellt wird, umfassend zumindest die folgenden Schritte:
a) Bereitstellen des Rohbauteils (10);
b) Durchführen eines Prozessabschnitts (32) des Materialabtragungsprozesses (30) unter Verwendung zumindest eines, den Prozessabschnitt (32) charakterisierenden Soll-Parameterwertes (34) und Ermitteln zumindest eines Ist-Parameterwertes (38) mittels zumindest eines Sensors (22);
c) Ermitteln zumindest einer Abweichung (42) des zumindest einen Ist-Parameterwertes (38) von dem zumindest einen Soll-Parameterwert (34);
d) Bestimmen zumindest eines Grenzwertes (50) in Abhängigkeit von der Abweichung, wenn der zumindest eine Ist-Parameterwert (38) den zumindest einen Soll-Parameterwert (34) unterschreitet, wobei dann der zumindest eine Grenzwert (50) derart bestimmt wird, dass eine Grenzwertabweichung (52) zwischen dem zumindest einen Grenzwert (50) und dem zumindest einen Ist-Parameterwert (38) einen kleineren Abweichungsbetrag als die Abweichung (42) aufweist, oder Ändern des Durchführens des Prozessabschnitts (32) in Abhängigkeit von zumindest einem Überschreitungswert (60), wenn der zumindest eine Ist-Parameterwert (38) den zumindest einen Soll-Parameterwert (34) um den zumindest einen Überschreitungswert (60) überschreitet, wobei dann der zumindest eine Soll-Parameterwert (34) des Prozessabschnitts (30) als der zumindest eine Grenzwert (50) festgelegt wird;
e) Festlegen des zumindest einen Grenzwertes (50) als wenigstens einen Soll-Parameterwert (70) eines nachfolgenden Prozessabschnitts (72) des Materialabtragungsprozesses (30);
f) Durchführen des nachfolgenden Prozessabschnitts (72) unter Verwendung des in Schritt e) festgelegten wenigstens einen Soll-Parameterwertes (70).

2. Verfahren nach Anspruch 1,
**gekennzeichnet durch** den weiteren Schritt:
g) Wiederholen der Schritte b) bis f) bis zum Erreichen eines Endes des Materialabtragungsprozesses (30).

3. Verfahren nach Anspruch 1 oder 2,
**dadurch gekennzeichnet, dass**
der Materialabtragungsprozess (30) unterbrochen wird, wenn der Überschreitungswert (60) in Schritt d) eine vorgegebene Überschreitungswertgrenze (62) erreicht.

4. Verfahren nach einem der vorhergehenden Ansprüche,
**dadurch gekennzeichnet, dass**
die Schritte c) bis e) während des Prozessabschnitts (32) des Materialabtragungsprozesses (30) erfolgen.

5. Verfahren nach einem der vorhergehenden Ansprüche,
**dadurch gekennzeichnet, dass**
als der wenigstens eine Sensor (22) ein Stromsensor verwendet wird, und als der zumindest eine Soll-Parameterwert (34) ein Soll-Strombedarf der Bearbeitungsmaschine (20) verwendet wird.

6. Verfahren nach einem der vorhergehenden Ansprüche,
**dadurch gekennzeichnet, dass**
der zumindest eine Soll-Parameterwert (34) basierend auf einem Materialabtragungsprozess-Modell vorgegeben wird.

7. Verfahren nach einem der vorhergehenden Ansprüche,
**dadurch gekennzeichnet, dass**
der Grenzwert (50) in Schritt d) basierend auf einer zeitlichen Änderung der Abweichung (42) während des Prozessabschnitts (32) bestimmt wird.

8. Verfahren nach einem der vorhergehenden Ansprüche,
**dadurch gekennzeichnet, dass**
der Grenzwert (50) in Schritt d) basierend auf einer örtlichen Änderung der Abweichung (42) während des Prozessabschnitts (32) bestimmt wird.

9. Bearbeitungsmaschine (20) zur Bearbeitung eines Rohbauteils (10), mittels welcher das Rohbauteil (10) einem Materialabtragungsprozess (30) unterziehbar und dadurch ein Bauteil aus dem Rohbauteil (10) herstellbar ist und welche dazu eingerichtet ist,
- einen Prozessabschnitt (32) des Materialabtragungsprozesses (30) unter Verwendung zumindest eines, den Prozessabschnitt (32) charakterisierenden Soll-Parameterwertes (34) durchzuführen und zumindest einen Ist-Parameterwert (38) mittels zumindest eines Sensors (22) der Bearbeitungsmaschine (20) zu ermitteln;
- zumindest eine Abweichung (42) des zumindest einen Ist-Parameterwertes (38) von dem zumindest einen Soll-Parameterwert (34) zu ermitteln;
- zumindest einen Grenzwert (50) in Abhängigkeit von der zumindest einen Abweichung (42) zu bestimmen, wenn der zumindest eine Ist-Parameterwert (38) den zumindest einen Soll-Parameterwert (34) unterschreitet,
- den zumindest einen Grenzwert (50) derart zu bestimmen, dass zumindest eine Grenzwertabweichung (52) zwischen dem zumindest einen Grenzwert (50) und dem zumindest einen Ist-Parameterwert (38) einen kleineren Abweichungsbetrag als die zumindest eine Abweichung (42) aufweist,
- das Durchführen des Prozessabschnitts (32) in Abhängigkeit von zumindest einem Überschreitungswert (60) zu ändern, wenn der zumindest eine Ist-Parameterwert (38) den zumindest einen Soll-Parameterwert (34) um den zumindest einen Überschreitungswert (60) überschreitet,
- den Soll-Parameterwert (34) des Prozessabschnitts (32) als den Grenzwert (50) festzulegen;
- den Grenzwert (50) als Soll-Parameterwert (70) eines nachfolgenden Prozessabschnitts (72) des Materialabtragungsprozesses (30) festzulegen;
- den nachfolgenden Prozessabschnitt (72) unter Verwendung des als Soll-Parameterwert (70) des nachfolgenden Prozessabschnitts festgelegten Grenzwertes (50) durchzuführen.

10. Bearbeitungsmaschine (20) nach Anspruch 9,
**dadurch gekennzeichnet, dass**
die Bearbeitungsmaschine (20) eine Fräsmaschine, eine Drehmaschine, eine Schleifmaschinen oder eine Erodiermaschine ist.
